# EUROPEAN PATENT SPECIFICATION

(11) **EP 2 176 602 B1**
(45) Date of publication and mention of the grant of the patent: **19.10.2011**
(21) Application number: 08789522.3
(22) Date of filing: 01.08.2008
(51) Int. Cl.: F24J 2/34, F24J 2/14, F24J 2/54

(54) **DEVICE FOR HEATING A FLUID THROUGH SOLAR ENERGY**
VORRICHTUNG ZUM ERWÄRMEN EINES FLUIDS DURCH SONNENENERGIE
DISPOSITIF POUR CHAUFFER UN FLUIDE PAR ÉNERGIE SOLAIRE

(30) Priority: 03.08.2007 IT FO20070006 U
(43) Date of publication of application: 21.04.2010
(73) Proprietor: Fiorini, Claudio, 47100 Forlì (IT)
(72) Inventor: Fiorini, Claudio, 47100 Forlì (IT)
(74) Representative: Schiavone, Cristina
(86) International application number: PCT/IB2008/053095
(87) International publication number: WO 2009/019643

(56) References cited:
- AU-B2- 549 379
- FR-A- 2 257 067
- GB-A- 2 147 408
- US-A- 2 247 830
- US-A- 4 291 677
- US-A- 4 291 677
- US-A- 4 307 711
- US-A- 4 307 711
- US-A- 4 351 319
- US-A- 4 587 952
- US-A- 4 644 933

## Description

### Technical Field

The present invention relates to a device for heating a fluid through solar energy.

### Background Art

Currently, both for attention to environmental protection and for reasons of economy or else, the general interest turned to alternative energy sources is known to be in continuous expansion. Industry, for years, has placed on the market several products that exploit solar energy for various purposes. Skipping particular uses generally reserved to industry, the more typical one is applied to the heating sector. In this area, the market proposes several types of solar panels, which though present the common feature to be fixed. It is clear that their performance reaches a maximum peak when the sun strikes them perpendicularly but decreases then more or less drastically while getting away from this ideal condition. Even perfectly directing the solar panels on midday sun during the summer, they would result too inclined for the winter sun. It can easily be imagined that in order to exploit them more homogeneously throughout the year it is therefore necessary to install the solar panels with a compromise inclination. Then, if we consider that the more you get away from central hours of the day, more the energy is reflected from the socket that protects the tapping elements, it is easy to understand how reduced the actual percentage of useful energy is. And it still has to be considered that if the few hours in which the efficiency reaches culmination coincide with a momentary cloudiness of the sky, the final result obtained is really disappointing,

Up to now the only solution to this problem has been to oversize the area of the panels, However, often there is not available space eneugh, therefore it is frequently necessary to give up the installation.

US 4 644 933 illustrates a solar collector which combines a magnifying lens with separate reflectors to increase solar collection. The collector also tracks celestial movement so as to constantly maintain maximum solar exposure.

US 4 351 319 discloses an apparatus for maintaining a radiation sensitive portion thereof in alignment with a distant source of radiation during relative movement between the situs of the apparatus and the source, wherein movement from alignment causes a differential in energy output in spaced apart elements of the radiation sensitive portion which is transformed into mechanical energy to return the portion to alignment.

US 4 291 677 illustrates a solar energy collector comprising a parabola shaped mirror formed by a plurality of flexible reflective film strips stretched over a plurality of supports being arranged to position the film in a parabola shape. The mirror is pivotally secured to a support assembly whereby the mirror can be maintained at the same relative position to the sun. Positioning of the mirror is controlled by an energy rays tracking device. The supports are adjustable such that light and infrared energy rays striking the film between the supports are reflected to the focus of the mirror around which a collector assembly is located.

US 4 307 711 discloses a sun tracking solar energy collector system comprising a plurality of light focusing elements disposed side by side in the form of a surface array, providing a linear array of foci, and a metallic heat exchanger tube having externally a high absorptivity, low reflectivity coating containing a working fluid such as water, air, hydrogen or helium, to which a substantial portion of the energy in the focused light is imparted.

### Disclosure of Invention

### Disclosure

The aim of the present invention is to overcome the cited drawbacks by devising a device for heating a fluid through solar energy suitable to rapture, in perfect autonomy, all solar energy that striker it.

Within this aim, it is a further aim of the present invention to provide with a device for heating a fluid through solar energy with reduced dimensions.

Another aim of the present invention is to provide with a device for heating a fluid through solar energy of simple, constructive and functional conception, equipped with a certainly reliable functioning, of versatile use, as well as of relatively economical costs.

The cited aims are reached, according to the claimed invention, by a device for heating a fluid through solar energy according to claim 1.

### Description of Drawings

Description details of the invention will be further evident in the illustrations of preferred embodiments of the device for heating a fluid through solar energy according to the invention, illustrated in the guideline drawings attached, wherein:

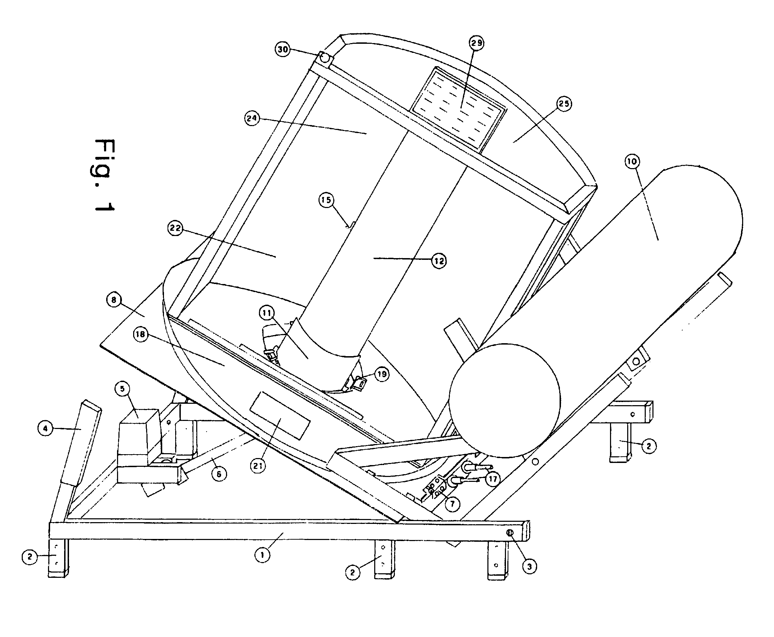

Fig. 1 illustrates an axonometric view of a device for heating a fluid through solar energy according to the claimed invention;

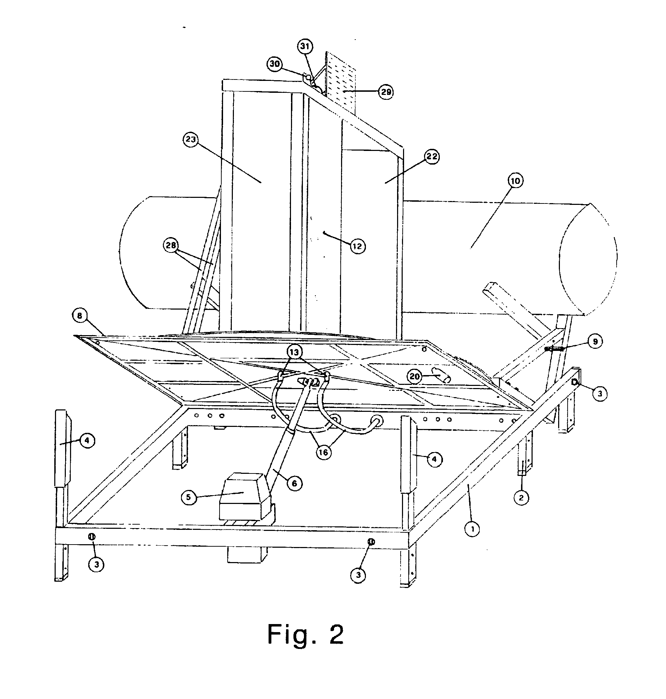

Fig. 2 illustrates an axonometric view of the device from a different angle;

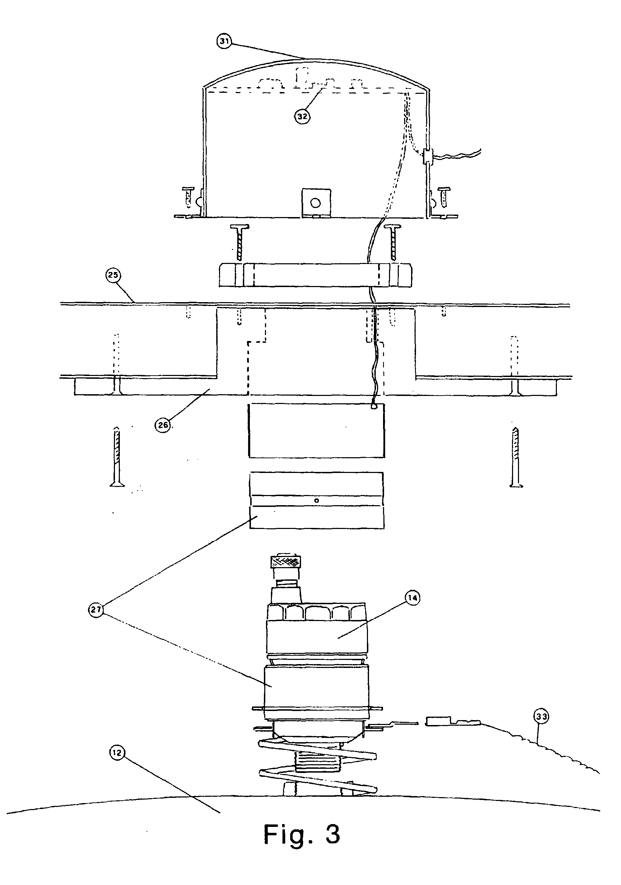

Fig. 3 illustrates an exploded side view of a detail of the device.

### Best Mode

With reference to such figures, 1 indicates the frame of the device for heating a fluid through solar energy. The frame 1 is equipped with feet 2 necessary for the installation on a horizontal plane or for the anchorage to brackets prearranged in case of inclined planets.

On the base frame are arranged the ringbolts 3, useful to fix possible tie rods, the buffers 4, the control unit 5 seated inside a tight box and underneath it the fixed part of the actuator 6. For a good functioning, the base frame must be mounted horizontal and with the greater axis preferably in direction north-south. On an inner crossbeam of the frame some hinges 7 are mounted, to which is fixed one side of the inclinable plane 8, which can vary its inclination through the actuator 6. The excursion limits are imposed by electrical limit switch, inside the actuator 6, and mechanic stops, consisting for example of buffers 4 and pins 9 (only one illustrated). In ascending movement, where the effort is greater, the actuator 6 is helped by the weight of the exchanger 10 (or otherwise by any inert mass), placed rocking on the opposite side of the mobile plain and, for the first degrees, also by the thrust of the buffers. At the centre of the plane and perpendicular to it a cylinder 12 is fixed, thanks to a robust socket 11. From the lower end of the cylinder 12 come out supply and output pipes 13, while on the upper end a relief valve 14 is coaxially mounted, well secured. Suitably, a temperature sensor 15 is provided, placed either on the outside of the cylinder, as illustrated, or inside it. According to the materials used and to the type of use, it may also be necessary, inside the cylinder, to install a corrosion-proofing cathode (not illustrated). The supply and outlet pipes of the cylinder are connected with two hoses 16 directly to the mouths 17 hot-cold fixed to the inner crossbeam (this is the configuration of the direct heating of the fluid or where an exchanger is used different from the one equipped). If however the use the equipped exchanger, with interposed pump and possible expansion tank, is desired, the hoses will have to be connected to this element. Above the inclinable plane, outside the socket, the circular plane 18 is mounted. Thanks to a series of bearings (or other revolving members), some of which mounted on a specific ring 19, the circular plane is maintained rested on the plane, centered as regards the axis of the cylinder but free to turn through an engine 20. The space between the circular plane and the plane below hosts and protects the mechanical transmission members, which can be inspected only through the manhole 21. The circular plane rotates to follow the apparent motion of the sun from morning to evening, limited in extreme positions by electrical and mechanical limit switch. On the crown and perpendicular to it, are mounted a transparent pane 22, two rigid heat-insulating material edges 23, a reflective pane 24 (for example, of mirrored stainless steel) calendered with parabolic bending whose fulcrum coincides with the axis of the cylinder. Immediately above the cylinder there is a cover 25, also of rigid material and heat-insulating, which houses, at the centre, in an appropriate seat 26, a roller bearing 27 whose inner part is inserted into the body of the relief valve 14. The bearing is mechanically connected but electrically isolated with appropriate insulator both towards the valve and towards the cover. This bearing serves multiple functions:

(a) to support a part of the weight of the cylinder (and its contents), especially when, in the central hours of the day, it is in an almost horizontal position, allowing the rotation between valve and cover.

(b) thanks to the fact that can slide axially, it allows the cylinder to stretch due to the effect of thermal expansions and allows convenient dismantling of the cover when necessary.

(c) to ensure the electrical continuity between the fixed part (the cylinder) and that mobile (the impeller), connection whose utility will be dealt later on. It can easily be imagined how the cylinder, and with it the fluid in it, heats up, both for direct solar energy that frontally strikes it, and for the energy reflected by the mirror that concentrates it at the rear. The room consisting of a portion of the circular plane, the mirror, the transparent pane, the sides and the cover, in addition to maintaining the parties enclosed inside clean and protected by external agents, prevents the cylinder from heating subtractions, otherwise inevitable. Also the convex face of the mirror (the one turned outward) has to be properly coated to limit the heat loss. A series of brackets 28 anchored to the circular crown is meant to hold the mirror and the rear part of the cover. Above the lid is situated, fitted with two brackets, a small photovoltaic panel 29, meant to provide all electricity required by the control and movement members. Furthermore, above the lid a position sensor 30 is mounted, which generates the piece of information required to follow the sun. In the inner upper part of the lid 31 that protects the relief valve and the roller bearing, there is a circuit 32 that elaborates the pieces of information and mixes them with the direct current produced by the panel. The roller bearing transfers all this to a wire 33 that runs parallel to the cylinder, comes out of a hole underneath the socket, and with other wires finally comes to the electronic control unit. This, equipped with a battery, serves mainly to the following functions:

1) making the cylinder and with it the photovoltaic panel remain perpendicular to sunbeams or anyway to the lighter area of the sky;

2) replacing the impeller at rest toward east after dusk;

(3) intervening in case of too high or too low temperatures (if required);

(4) controlling possible peripheral devices.

By varying the diameter ratio of the cylinder (which may be a tank, a serpentine or any other enhancing element) and the area of the overall tapping, it is possible to shift from the field of low temperatures (below 100 °C) to medium ones (between 100 and 250 °C).

In the field of low temperatures applications of the object may be many, such as:

(a) direct heating of water for swimming pools, sanitary fittings and showers in seaside resorts, camping sites, houses in places not served by electricity and the like;

(b) with supplied heat exchanger or other (with intermediate liquid), heating for sanitary hot water (household and similar);

(c) with kettle (with intermediate liquid) heating sanitary hot water and integration to the room traditional heating;

In the field of medium temperatures:

(a) the heating of forced-air-circulation rooms;

(b) cooling of rooms.

The claimed device reaches the aim to capture, in perfect autonomy, the whole solar energy that hits it. This is obtained in particular thanks to the fact that there are electromechanical members that maintain it always oriented in the more favorable direction. This gives it a definitely higher efficiency compared to the one of the traditional fixed collectors, with equal surface committed.

It has to be pointed out that the plane that tilts 8 holds the circular plane 18, which rotates and not vice versa as it happens, for example, in tracking photovoltaic panels. This allows a considerable constructive simplification at expense of a little appreciable reduction of the coverage of the apparent trajectory of the sun (limitedly to some winter months and only in the central hours of the day).

It also has to be noted that, if we exclude a slight variation in the bending radius of the two flexible tubes, when the plane 8 tilts, between mobile and fixed parts there are neither tubes nor electrical cables that wind. This makes the mechanism very reliable.

It must also be noted that the heat exchanger 10 is placed rocking on the opposite side of the mobile plane (8), in order to reduce the effort of the actuator in the first ascending part, the more difficult, and therefore also its sizing in the project.

Furthermore, it has to be notes that the roller bearing 27 is suitable to assure the electrical continuity between the fixed part and the mobile one. This function may also be carried out by means of cables, which though inevitably twist themselves and therefore wear quickly, either by means of sliding contacts, which wear out with time and which however unnecessarily increase the complexity of the mechanism.

In case reasons of space or of aesthetics would require so, nothing precludes the possibility to vary with a large margin, the relationship width-height of the claimed device. It is possible to transform the device in a small central energy, for example by increasing the area of the photovoltaic panels and/or integrating them with a small wind generator, thus providing the user also with precious electric power.

The materials adopted for the actual realization of the invention, as well as their shapes and sizes, can be various, depending on the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for heating a fluid through solar energy, comprising a cylinder (12) suitable to contain the fluid to be heated; a parabolic mirror (24) having the focal point coinciding with the axis of said cylinder (12) so as to concentrate solar energy that radiates on the cylinder (12) itself; a circular plane (18) carrying said mirror (24) and suitable to be operated in rotation by an engine (20),
said device being **characterized in that** it comprises:
a plane (8) that can be tilted on command by actuators (6), carrying the unit formed by said cylinder (12), mirror (24) and circular plane (18) in order to optimize the angle of elevation as to the horizontal plane;
a photovoltaic panel (29) suited to provide the electric power needed by the control and movement members, said photovoltaic panel being mounted on the revolving part, in order to remain always oriented in the position of maximum performance;
a heat exchanger (10) placed rocking on the opposite site of said mobile plane (8) such that the actuator (6) is helped by the weight of said heat exchanger (10) in ascending movement. a room consisting of a portion of said plane (18), of said mirror (24), of a transparent pane (22), of two sides and of a cover (25), which, in addition to maintaining the parts enclosed inside clean and protected by external agents, prevents the cylinder from heating subtractions, wherein said cylinder (12) is enclosed inside said room.

2. Device according to claim 1, **characterized in that**, when the plane (8) tilts, between the mobile and fixed parts there are neither pipes nor electrical cables that twist themselves, except for a slight variation in the bending radius of two flexible tubes.

3. Device according to claim 1, **characterized in that** only the parabolic mirror (24) rotates to maintain its axis in the direction of the sun, while said cylinder (12) tilts together with the mirror but does not rotate.

4. Device according to claim 1, **characterized in that** it comprises a roller bearing (27) that, in addition to interface the fixed part (14) with the mobile one (25), partially holds the weight of said cylinder (12).

5. Device according to claim 4, **characterized in that** the roller bearing (27) easily allows the disassembly of the lid (25).

6. Device according to claim 4, **characterized in that** the roller bearing (27) allows the cylinder (12) to stretch due to thermal expansions.

7. Device according to claim 4, **characterized in that** the roller bearing (27) is suitable to ensure the electrical continuity between the fixed part and the mobile part.

8. Device according to claim 1, **characterized in that** it comprises a relief valve (14), which is the upper mechanical pin of the cylinder (12), being mounted on its axis.

9. Device according to claim 8, **characterized in that** on the body of said relief valve (14) is placed the inner part of the roller bearing (27).

10. Device according to claim 1, **characterized in that** it comprises a series of bearings, or other revolving means, which constrain the circular plane (18) to the plane (8) that can be tilted, allowing it only with a circular motion.

## Patentansprüche

1. Vorrichtung zum Erhitzen eines Fluids mit Hilfe von Sonnenenergie, umfassend
- einen Zylinder (12), der das zu erhitzende Fluid aufnehmen kann;
- einen Parabolspiegel (24), dessen Brennpunkt auf der Achse des Zylinders (12) liegt, um die ihn bestrahlende Sonnenenergie auf den Zylinder zu bündeln;
- eine kreisrunde Platte (18), die den Spiegel (24) trägt und von einem Motor (20) in Drehung versetzt werden kann,
wobei diese Vorrichtung **dadurch gekennzeichnet ist, dass** sie eine auf Befehl von Aktuatormitteln (6) neigbare Platte (8) umfasst, welche die aus dem Zylinder (12), dem Spiegel (24) und der kreisrunden Platte (18) gebildete Baugruppe trägt, um den Höhenwinkel in Bezug auf die waagrechte Ebene zu optimieren;
- ein Solarpaneel (29), das die von den Steuer- und Bewegungselementen benötigte elektrische Energie liefern kann, wobei das Solarpaneel auf den drehbaren Teil montiert ist, damit es stets in der Position der maximalen Ausbeute ausgerichtet bleibt;
- einen Austauscher (10), der als Ausgleichsgewicht auf der der beweglichen Platte (8) gegenüberliegenden Seite so angeordnet ist, dass der Aktuator (6) bei der Abwärtsbewegung durch das Gewicht dieses Austauschers (10) unterstützt wird;
- eine aus einem Teil der Platte (18), dem Spiegel (24), einer transparenten Platte (22), zwei Seitenwänden und einem Deckel bestehende Kammer, die einerseits die in ihrem Innern eingeschlossenen Teile sauber und gegen äußere Einflüsse geschützt hält und andererseits verhindert, dass dem Zylinder Wärme entzogen wird, wobei der Zylinder (12) in der Kammer eingeschlossen ist.

2. Vorrichtung nach Anspruch 1, **dadurch gekennzeichnet, dass** es, wenn man von einer geringfügigen Variation des Krümmungsradius von zwei Schläuchen absieht, zwischen den beweglichen und den festen Teilen weder Schläuche noch Stromkabel gibt, die sich verdrehen, wenn sich die Platte (8) neigt.

3. Vorrichtung nach Anspruch 1, **dadurch gekennzeichnet, dass** sich nur der Parabolspiegel (24) dreht, um seine Achse zur Sonne hin ausgerichtet zu halten, während sich der Zylinder (12) zusammen mit dem Spiegel neigt, ohne sich jedoch zu drehen.

4. Vorrichtung nach Anspruch 1, **dadurch gekennzeichnet, dass** sie ein Rollenlager (27) umfasst, das einerseits den festen Teil (14) mit dem beweglichen Teil (25) verbindet und andererseits zum Teil das Gewicht des Zylinders (12) trägt.

5. Vorrichtung nach Anspruch 4, **dadurch gekennzeichnet, dass** das Rollenlager (27) das mühelose Abnehmen des Deckels (25) ermöglicht.

6. Vorrichtung nach Anspruch 4, **dadurch gekennzeichnet, dass** das Rollenlager (27) dem Zylinder (12) gestattet, sich aufgrund der Wärmeausdehnungen auszudehnen.

7. Vorrichtung nach Anspruch 4, **dadurch gekennzeichnet, dass** das Rollenlager (27) geeignet ist, den elektrischen Durchgang zwischen dem festen und dem beweglichen Teil zu gewährleisten.

8. Vorrichtung nach Anspruch 1, **dadurch gekennzeichnet, dass** sie ein Entlüftungsventil (14) umfasst, das den oberen mechanischen Zapfen des Zylinders (12) bildet, da es auf seine Achse montiert ist.

9. Vorrichtung nach Anspruch 8, **dadurch gekennzeichnet, dass** auf dem Körper des Entlüftungsventils (14) der innere Teil des Rollenlagers (27) untergebracht ist.

10. Vorrichtung nach Anspruch 1, **dadurch gekennzeichnet, dass** sie eine Reihe von Lagern oder anderen Wälzmitteln umfasst, welche die kreisrunde Platte (18) an die neigbare Platte (8) binden und ihr nur eine Kreisbewegung gestatten.

## Revendications

1. Dispositif pour réchauffer un fluide au moyen de l'énergie solaire, comprenant
- un cylindre (12) propre à contenir le fluide à réchauffer ;
- un miroir parabolique (24) ayant le point focal coïncidant avec l'axe dudit cylindre (12) de manière à concentrer l'énergie solaire qui irradie sur la cylindre (12) lui-même ;
- un plan circulaire (18) portant ledit miroir (24) et propre à être mû en rotation par un moteur (20) ;
ledit dispositif étant **caractérisé en ce qu'**il comprend
- un plan (8) qui peut être oscillé sur commande par des actuateurs (6), portant l'unité formée par lesdits cylindre (12), miroir (24) et plan circulaire (18) pour optimiser l'angle d'élévation par rapport au plan horizontal ;
- un panneau photovoltaïque (29) propre à fournir l'énergie électrique requise par les organes de contrôle et de mouvement, ledit panneau photovoltaïque étant monté sur la partie rotative, pour rester toujours orienté dans la position de performance maximale ;
- un échangeur de chaleur (10) placé à bascule sur le côté opposé dudit plan mobile (8) de sorte que l'actuateur (6) est aidé par le poids dudit échangeur de chaleur (10) dans en mouvement ascendant ;
- une chambre constitué d'une portion dudit plan (18), dudit miroir (24), d'un pan transparent (22), de deux côtés et d'un couvercle (25), qui, en plus de maintenir les parties incluses à l'intérieur propres et protégées d'agents extérieurs, empêche que le cylindre subisse des soustractions de chaleur, dans lequel ledit cylindre (12) est contenu à l'intérieur de ladite chambre.

2. Dispositif selon la revendication 1, **caractérisé en ce que**, quand le plan (8) oscille, entre les parties mobile et fixe il n'y a ni conduits ni câbles électriques qui se tordent sur eux-mêmes, sauf pour une légère variation dans le rayon de courbure de deux tubes flexibles.

3. Dispositif selon la revendication 1, **caractérisé en ce que** seul le miroir parabolique (24) tourne pour maintenir son axe dans la direction du soleil, alors que ledit cylindre (12) oscille avec le miroir mais ne tourne pas.

4. Dispositif selon la revendication 1, **caractérisé en ce qu**'il comprend un roulement à rouleaux (27) qui, en plus d'interfacer la partie fixe (14) avec celle mobile (25), tient partiellement le poids dudit cylindre (12).

5. Dispositif selon la revendication 4, **caractérisé en ce que** le roulement à rouleaux (27) permet facilement le désassemblage du couvercle (25).

6. Dispositif selon la revendication 4, **caractérisé en ce que** le roulement à rouleaux (27) permet au cylindre (12) de s'étendre du fait des expansions thermiques.

7. Dispositif selon la revendication 4, **caractérisé en ce que** le roulement à rouleaux (27) est propre à assurer la continuité électrique entre la partie fixe et la partie mobile.

8. Dispositif selon la revendication 1, **caractérisé en ce qu**'il comprend une soupape de sûreté (14), qui est le pointeau mécanique supérieur du cylindre (12), étant monté sur son axe.

9. Dispositif selon la revendication 8 ; **caractérisé en ce que** sur le corps de ladite soupape de sûreté (14) est placée la partie intérieure du roulement à rouleaux (27).

10. Dispositif selon la revendication 1, **caractérisé en ce qu**'il comprend une série de roulements, ou autres moyens rotatifs, qui lient le plan circulaire (18) au plan (8) qui peut être oscillé, lui permettant seulement un mouvement circulaire.
